# EUROPEAN PATENT APPLICATION

(11) **EP 0 550 207 A1**
(43) Date of publication of application: **07.07.1993**
(21) Application number: 92311457.3
(22) Date of filing: 15.12.1992
(51) Int. Cl.: C08L 71/12, C08L 67/02, C08K 5/00

(54) **Polyphenylene ether/polyalkylene terephthalate compositions**

(30) Priority: 31.12.1991 US 815208
(71) Applicant: GENERAL ELECTRIC COMPANY, Schenectady, NY 12345 (US)
(72) Inventor: Angeli, Stephen Richard, North Carolina 28601 (US); Yates, John Bennie, III., Glenmont, New York 12077 (US)
(74) Representative: Pratt, Richard Wilson

(57) **Abstract**

Thermoplastic compositions having improved high temperature processing stability comprise a polyphenylene ether polymer, a polyalkylene terephthalate polymer and a stabilizer composition. The stabilizer composition comprises a combination of a hindered phenolic stabilizer, a thio stabilizer and a phosphite stabilizer.

## Description

### FIELD OF THE INVENTION

The present invention relates to thermoplastic compositions comprising a polyphenylene ether polymer and a polyalkylene terephthalate polymer. More particularly, the present invention relates to such thermoplastic compositions which exhibit improved stability to high temperature processing, particularly as indicated by a retention in impact strength.

### BACKGROUND OF THE INVENTION

Polyphenylene ether resins are well known in the art and exhibit a desirable combination of chemical, physical and electrical properties over a wide temperature range. This combination of properties renders polyphenylene ether resins suitable for use in a broad range of applications. Often times, polyphenylene ether resins are blended with other resins to improve one or more properties of the polyphenylene ether resins and increase their fields of application. PCT published Application 87/850 describes blends of polyphenylene ether resins and polyesters, and discloses that polyesters such as poly(alkylene dicarboxylates), particularly poly(alkylene terephthalates), can be added to polyphenylene ether resins in order to improve the resistance of the polyphenylene ethers to non-polar solvents such as gasoline.

One problem in commercially providing satisfactory blend compositions of polyphenylene ether and polyalkylene terephthalate is that the polyalkylene terephthalate undergoes thermal degradation during processing. That is, the common processing temperatures for polyphenylene ether exceed the thermal decomposition temperatures for most polyalkylene terephthalate polymers. Accordingly, an unacceptably narrow processing temperature window is required for many injection molding applications of polyphenylene ether-polyalkylene terephthalate blend compositions. A need therefore exists for improved compositions of polyphenylene ether and polyalkylene terephthalate which exhibit better high temperature stability.

### SUMMARY OF THE INVENTION

Accordingly, it is an object of the present invention to provide thermoplastic compositions which comprise a polyphenylene ether polymer and a polyalkylene terephthalate polymer, and which exhibit improved high temperature stability. It is a more specific object of the invention to provide thermoplastic compositions which comprise a polyphenylene ether polymer and a polyalkylene terephthalate polymer, and which may be processed at higher temperatures without a significant loss in impact strength. It is a related object of the invention to provide thermoplastic compositions comprising a polyphenylene ether polymer and a polyalkylene terephthalate polymer, which compositions may be successfully injection molded to provide various shaped articles.

These and additional objects are provided by the compositions of the present invention which comprise a polyphenylene ether polymer, a polyalkylene terephthalate polymer and a stabilizer composition. The stabilizer composition comprises a combination of a hindered phenolic stabilizer, a thio stabilizer and a phosphite stabilizer. It has been discovered that this combination of stabilizers provides the compositions of polyphenylene ether and polyalkylene terephthalate polymers with improved high temperature stability, particularly as indicated by a substantial retention of impact strength when the compositions are processed at high temperatures.

These and additional objects and advantages will be more fully apparent in view of the following detailed description.

### DETAILED DESCRIPTION

The thermoplastic compositions of the present invention comprise a polyphenylene ether polymer, a polyalkylene terephthalate polymer and a stabilizer composition.

Polyphenylene ether resins are well known in the art and are generally of the formula 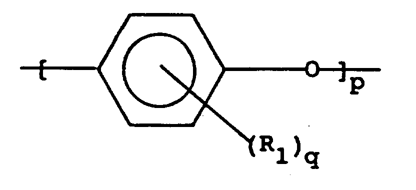
wherein each R₁ is individually selected from the group consisting of halogen, alkyl, aryl and alkoxy, q is from 0 to 4 and p is at least 20. When R₁ comprises an alkyl group, an aryl group or an alkoxy group, the group suitably contains from about 1 to about 12 carbon atoms.

The polyphenylene ether polymers suitable for use in the present invention are well known in the art and may be prepared by any of a number of processes known in the art from corresponding phenols or reactive derivatives thereof. Examples of polyphenylene ether resins and methods for their production are set forth in the Hay U.S. Patents Nos. 3,306,874 and 3,306,875, in the Stamatoff U.S. Patents Nos. 3,257,357 and 3,257,358, and in U.S. Patent No. 4,935,472 of S. B. Brown et al, all of which are incorporated herein by reference. Throughout the specification and claims the term "polyphenylene ether resin" includes unsubstituted polyphenylene ether polymers, substituted polyphenylene ether polymers (wherein the aromatic ring is substituted), polyphenylene ether copolymers and blends thereof.

Preferred polyphenylene ether polymers adapted for use in the present invention include, but are not limited to, poly(2,6-dimethyl-1,4-phenylene)ether; poly(2,3,6-trimethyl-1,4-phenylene) ether; poly(2,6-diethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene)ether; poly(2,6-dilauryl-1,4-phenylene)ether; poly(2,6-diphenyl-1,4-phenylene)ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly-(2-methyl-6-phenyl-1,4-phenylene)ether; poly(2,6-dibenzyl-1,4-phenylene)ether; poly(2-ethoxy-1,4-phenylene)ether; poly(2-chloro-1,4-phenylene) ether; poly(2,6-dibromo-1,4-phenylene)ether; poly(3-bromo-2,6-dimethyl-1,4-phenylene)ether, copolymers thereof and mixtures thereof, and the like. Particularly preferred polyphenylene ether polymers for use in the compositions of the present invention include poly(2,6-dimethyl-1,4-phenylene) ether, poly(2,3,6-trimethyl-1,4-phenylene)ether, blends of these polymers and copolymers including units of 2,3,6-trimethyl-1,4-phenylene ether and units of 2,6-dimethyl-1,4-phenylene ether. Examples of such polymers and copolymers are also set forth in U. S. Patent No. 4,806,297.

In an alternate embodiment, the polyphenylene ether polymer may be functionalized (i.e., capped) in a manner known in the art. For example, the polyphenylene ether polymer may be epoxy-functionalized in a manner set forth in commonly assigned applications Serial No. 07/351,903 and Serial No. 07/351,905, both of which are incorporated herein by reference. Briefly, the epoxy-functionalized polyphenylene ether polymers are functionalized or capped with an epoxy triazine compound at the end of the polymer molecules. Epoxidized triazine compounds suitable for use in preparing the epoxy-functionalized polyphenylene ether polymers are disclosed in the Brown et al U.S. Patent No. 4,895,945, also incorporated herein by reference. Alternatively, the polyphenylene ether polymer may be phosphate-functionalized, i.e., end capped with a phosphate compound. Phosphate-functionalized polyphenylene ethers are disclosed in commonly assigned applications Serial No. 07/654,444, Serial No. 07/654,443, and Serial No. 07/653,586, all of which are incorporated herein by reference. In a preferred embodiment, the phosphate-functionalized polyphenylene ethers are prepared from a phosphate-substituted triazine compound. In a further embodiment, the polyphenylene ether may be ortho-ester functionalized by use of ortho-ester substituted triazine compounds as described in commonly assigned copending applications Serial No. 07/566,025 and Serial No. 07/623,838, both of which are incorporated herein by reference.

Accordingly, the polyphenylene ether polymer included in the thermoplastic compositions of the present invention may comprise one or more functionalized or non-functionalized polyphenylene ether polymers and/or copolymers, or mixtures thereof.

The second component of the thermoplastic compositions of the present invention comprises a polyalkylene terephthalate polymer. Polyalkylene terephthalate polymers are well known in the art, and examples of these polymers are set forth in U.S. Patents Nos. 4,902,753, 4,128,526, 3,953,394, 3,671,487, 3,047,539, 2,822,348, 2,727,881, 2,720,502, and 2,465,319, all of which are incorporated herein by reference. In a preferred embodiment, the polyalkylene terephthalate polymer comprises polybutylene terephthalate. Polyethylene terephthalate and mixtures of polybutylene terephthalate and polyethylene terephthalate are also preferred for use in the present composition.

The thermoplastic compositions preferably comprise from about 5 to about 95 weight percent polyphenylene ether polymer, and from about 95 to about 5 weight percent polyalkylene terephthalate polymer, based on the weight of the polymers. More preferably, the compositions comprise from about 15 to about 75 weight percent polyphenylene ether polymer, and from about 85 to about 25 weight percent polyalkylene terephthalate polymer, based on the weight of the polymers.

The third component at of the present compositions comprises a stabilizer composition. The stabilizer composition comprises a combination of a hindered phenolic stabilizer, a thio stabilizer and a phosphite stabilizer. It has been discovered that the combination of the hindered phenolic stabilizer, the thio stabilizer and the phosphite stabilizer provides the compositions with improved high temperature processing stability, particularly as indicated by a retention in the impact strength of the compositions after high temperature processing. Generally, hindered phenolic stabilizers, thio stabilizers and phosphite stabilizers have been used individually in the polymer art for providing stabilization to polymer compositions. However, it is a novel feature of the present invention to combine the hindered phenolic stabilizer, the thio stabilizer and the phosphite stabilizer and to include the resulting combination in the thermoplastic blend of a polyphenylene ether polymer and a polyalkylene terephthalate polymer. The significant improvement in high temperature stabilization of such compositions, particularly as indicated by a retention of impact strength after high temperature processing, is surprising.

Although the relative amounts of the hindered phenolic stabilizer, the thio stabilizer and the phosphite stabilizer included in the stabilizer composition may be varied, it is preferred that the stabilizer composition comprises from about 20 to about 50 weight percent of each of the hindered phenolic, thio and phosphite stabilizers. In a more specific embodiment, the stabilizer composition comprises substantially equal amounts by weight of each of the hindered phenolic, thio and phosphite stabilizers.

Hindered phenolic stabilizers are known in the art and are commercially available. It is preferred that the hindered phenolic stabilizer is of a molecular weight which is sufficiently high to prevent volatization of the hindered phenolic stabilizer when the thermoplastic composition is melt compounded. Preferably, the hindered phenolic stabilizer comprises an alkyl group of from 1 to about 12 carbon atoms in each of the positions ortho to the phenolic hydroxyl group. Tertiary butyl groups ortho to the phenolic hydroxyl group are further preferred. Additionally, it is preferred that the hindered phenolic stabilizer include two or more hindered phenolic groups. Examples of commercially available hindered phenolic stabilizers suitable for use in the present invention include, but are not limited to, Irganox® 1010 (2,2-bis[[3-[3,5-bis(1,1-dimethylethyl)-4-hydroxyphenyl]-1-oxopropoxy]methyl]-1,3-propanediyl-3,5-bis(1,1-dimethylethyl)-4-hydroxybenzenepropanoate) supplied by Ciba-Geigy; Vanox® GT (tris(3,5-di-tert-butyl-4-hydroxybenzyl) isocyanurate) supplied by R. T. Vanderbilt, Company, Inc.; Cyanox® 1790 (1,3,5-tris(4-tert-butyl-3-hydroxy-2,6-dimethyl benzyl)isocyanurate) supplied by American Cyanamid; Ultranox® 257 (the butylated reaction product of p-cresol and dicyclopentadiene), Ultranox® 246 (a methylene bis(tertiarybutylated phenol), and Ultranox® 276 (an octadecyl(ditertiary butylated hydroxyphenyl) propionate), all of which are supplied by GE Plastics; Ethanox® 330, 376, 702 and 703 (all of which contain at least one ditertiary butylated phenolic group) supplied by Ethyl Corporation; and Naugard® XL-1(2,2'-oxamido-bis[ethyl-3-3,5-di-tertiary-butyl-4-hydroxyphenyl )propionate]) supplied by Uniroyal Chemical Company.

Similarly, thio stabilizers for polymer systems are known in the art and are commercially available. In a preferred embodiment of the present invention, the thio stabilizer comprises a substituted thio propionate compound. Examples of commercially available thio propionate compounds include Irganox® 1035 (thiodiethylene bis(3-(3,5-di-tert-butyl-4-hydroxyphenyl)propionate)) supplied by Ciba-Geigy; Mark® 2140 (pentaerythritol octylthio propionate) and Seenox® 412S (pentaerythritol tetrakis[3-(dodecylthio)propionate]), both of which are supplied by Argus Chemical; and Cyanox® STDP (distearyl thiodipropionate) supplied by American Cyanamid. In an alternate embodiment, the thio stabilizer comprises a thio-substituted aromatic compound. Examples of commercially available thio-substituted aromatic compounds include Vanox® MTI (2-mercaptotoluimidazole); Vanox® ZMTI (zinc 2-mercaptotoluimidazole), both of which are supplied by R. T. Vanderbilt Company, Inc.; Ultranox® 236 (a thiobis-tertiary butylated phenolic compound) supplied by GE Plastics; and Ethanox® 736 (a thiobis-tertiary butylated compound) supplied by Ethyl Corporation.

Phosphite stabilizers are also known in the art for use with polymer compositions. In a preferred embodiment, the phosphite stabilizer for use in the stabilizer compositions of the present invention comprises a triaryl phosphite, a trialkyl phosphite, an alkyl aryl phosphite or a bis(alkylphenyl) pentaerythritol diphosphite. The aryl groups may include one or more alkyl substituents, and all of the various alkyl groups preferably contain from 1 to about 12 carbon atoms. Examples of commercially available phosphite stabilizers include Mark® 2112 (tris(2,4-di-tert-butylphenyl)phosphite) supplied by Argus Chemical; Wytox® 604S (a hindered phenolic phosphite) and Wytox 312® (tris(nonyl phenyl) phosphite), both of which are supplied by Olin Chemical; and Ultranox® 626 (a bis-tert-butylphenyl substituted pentaerythritol diphosphite), Weston® TNPP (tris(nonyl phenyl )phosphite), Weston® TDP (triisodecyl phosphite), Weston® DPDP (diphenyl isodecyl phosphite), Weston® ODPP (diphenyl isooctyl phosphite), and Weston® 618 (distearyl pentaerythritol diphosphite), all of which are supplied by GE Plastics.

The stabilizer composition is included in the thermoplastic compositions in an amount sufficient to improve the high temperature stability of the compositions, particularly as indicated by a substantial retention of impact strength after high temperature processing. Preferably, the stabilizer composition is included in an amount of from about 0.01 to about 2 weight percent, and more preferably in an amount of from about 0.2 to about 0.5 weight percent, based on the weight of the polymers.

The compositions according to the present invention may be produced according to any method known in the art. For example, the polyphenylene ether polymer and the polyalkylene terephthalate polymer may be prepared by melt mixing or compounding, with the stabilizer composition being added prior to or during melt compounding. Owing to the improved heat stability of the compositions of the invention, the compositions may be easily formed into various products in sheet form, or may be injection molded to form various shaped articles.

The compositions of the invention may further include one or more conventional additives including, but not limited to, antioxidants, fillers, flame retardants, reinforcing agents, and the like. Additionally, the compositions may include one or more additional polymer components to further improve one or more additional properties of the compositions, for example, impact strength, and/or to improve the compatibility of the polyphenylene ether and polyalkylene terephthalate polymer components.

For example, the compositions may further include a polycarbonate polymer for improving the compatibility of the polyphenylene ether and polyethylene terephthalate. Polycarbonates are well known in the art, as are their methods of preparation, as disclosed in the Brown et al U.S. Patent No. 4,806,297 which is incorporated herein by reference.

Among the preferred polymers of this type are the aromatic polycarbonate homopolymers. The structural units in such homopolymers generally have the formula 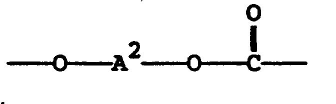
wherein A² is an aromatic radical. Suitable A² values include m-phenylene, p-phenylene, 4,4'-biphenylene, 2,2-bis(4-phenylene)propane, 2,2-bis(3-5-dimethyl-4-phenylene)-propane and similar radicals such as those which correspond to the dihydroxyaromatic compounds disclosed by name or formula (generic or specific) in U.S. Patent No. 4,217,438. Also included are radicals containing non-hydrocarbon moieties. These may be substituents such as chloro, nitro, alkoxy and the like, and also linking radicals such as thio, sulfoxy, sulfone, ester, amide, ether and carbonyl. Most often, however, all A² radicals are hydrocarbon radicals.

Various copolycarbonates are also useful. One example thereof is the polyester-polycarbonates of the type obtained by the reaction of at least one dihydroxyaromatic compound with a mixture of phosgene and at least one dicarboxylic acid chloride, especially isophthaloyl chloride, terephthaloyl chloride or both. Other examples are the siloxane-carbonate block copolymers disclosed, for example, in U.S. Patent Nos. 3,189,662 and 3,419,634, and the polyphenylene ether-polycarbonate block copolymers of U.S. Patent Nos. 4,374,223 and 4,436,876, which frequently provide compositions with substantially higher heat distortion temperatures than those containing homopolycarbonates. The disclosures of the patents listed above relating to polycarbonates and copolycarbonates are also incorporated by reference herein.

In a preferred embodiment, the compositions according to the invention comprise from about 1 to about 35 weight percent of a polycarbonate polymer.

The compositions of the invention may further include an impact modifier. Various impact modifiers are known in the art and suitable for use in the compositions of the present invention. In a preferred embodiment, the impact modifier comprises a vinyl aromatic polymer of one of the types described below. In an alternate embodiment, the impact modifier may comprise a rubber, natural or the impact modifier may comprise a rubber, natural or synthetic, or an elastomer, many of which are well known in the art. For example, the impact modifier may comprise an EPDM rubber, a polybutylacrylate rubber, a diene rubber, for example, polybutadiene, isoprene or the like. Compositions according to the present invention containing an impact modifier preferably contain the impact modifier in an amount of from about 1 to about 30 weight percent.

The compositions of the invention may further comprise a vinyl aromatic polymer which may optionally be an impact modifier. The vinyl aromatic polymer contains units derived from a monomer of a formula: 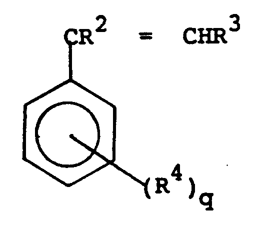
wherein R² and R³ are selected from the group consisting of lower alkyl or alkenyl groups of from, for example, 1 to 6 carbon atoms and hydrogen, each R⁴ is selected from the group consisting of halogen and lower alkyl or alkenyl groups of from, for example, 1 to 6 carbon atoms, and q is an integer of from 0 to 5. Throughout the specification and claims the term "vinyl aromatic polymer" includes unsubstituted polystyrene, substituted polystyrene and polystyrene copolymer resins. Suitable polystyrene resins include, but are not limited to, polystyrene homopolymers including atactic polystyrenes, halogenated polystyrenes, poly-alpha-methylstyrenes, poly-para-methylstyrenes, styrene-acrylonitrile copolymers, styrene-maleic anhydride copolymers, styrene-butadiene copolymers, rubber-modified polystyrenes and the like, and mixtures thereof. These vinyl aromatic polymers and their methods of preparation are well known in the art.

In one embodiment, the vinyl aromatic polymer comprises a rubber-modified polystyrene polymer, conventionally known in the art as HIPS (high impact polystyrene). The rubber-modified polystyrene polymer may be formed by addition of a rubber to a preformed polystyrene polymer or by addition of the rubber to styrene monomer which is then polymerized in the presence of the rubber. Both of these methods are well known in the art and may be employed in producing a rubber-modified polystyrene polymer for use in the present compositions.

In a further embodiment, the vinyl aromatic polymer comprises a block copolymer of a vinyl aromatic monomer and an alkene hydrocarbon monomer or a conjugated diene monomer. Various types of such block copolymers are known in the art. For example, the block copolymer may comprise a tapered linear block copolymer and generally comprises blocks of A and B, wherein A is a polymerized vinyl aromatic hydrocarbon block and B is a hydrogenated, partially hydrogenated, or non-hydrogenated block derived from at least one polymerized conjugated diene. Tapered linear block copolymers are known in the art, as are their methods of preparation, and are taught, for example, in U.S. Patents Nos. 4,948,832, 4,939,207, 4,918,145, 4,914,248, 4,913,971 and 4,116,917, all of which are incorporated herein by reference. Tapered triblock polymers are available commercially under the tradename Finaclear® 520 from Fina Oil Company.

In one embodiment, the block copolymers may be represented by the formula A-B-A wherein the terminal blocks A, which may be the same or different, are thermoplastic homopolymers or copolymers prepared from a vinyl aromatic compound. Examples of the vinyl aromatic compound include, but are not limited to, styrene, alpha-methylstyrene, vinyl toluene, vinyl xylene, ethylvinyl xylene, vinyl naphthalene and the like, or mixtures thereof. The center block B comprises an elastomeric polymer derived from alkene hydrocarbons such as ethylene or butylene, conjugated dienes or the like, or mixtures thereof. The block copolymers may be subjected to a hydrogenation process whereby the unsaturated rubber block portion B of the copolymer is hydrogenated. Hydrogenation may be accomplished using conventional hydrogenation catalysts and reaction conditions. In the hydrogenated block copolymers, the terminal blocks A may have an average molecular weight of from about 4,000 to about 115,000 while the center blocks B have an average molecular weight of from about 20,000 to about 450,000. Hydrogenated block copolymers are specifically described in the Jones U. S. Patent No. 3,431,323 and the DeLaMare et al U. S. Patent No. 3,670,054, both of which are incorporated herein by reference. Suitable block copolymers for use in the present invention comprise hydrogenated styrene-butadiene-styrene (styrene-ethylene-butylene-styrene) block copolymers and hydrogenated styrene-isoprene-styrene block copolymers. Block copolymers of this type are commercially available under the tradenames Kraton® from Shell Chemical and Septon® from Kuraray Co., Ltd.

In another embodiment, the vinyl aromatic polymer comprises a radial block copolymer of a vinyl aromatic monomer and a conjugated diene monomer. These radial block copolymers are also well known in the art. Copolymers of this type generally comprise from about 60 to about 95 percent by weight polymerized vinyl aromatic monomer and about 40 to about 5 percent by weight polymerized conjugated diene monomer. The copolymer has at least three polymer chains which formed a radial configuration, and each chain usually terminates with the substantially non-elastomeric segment, to which an elastomeric polymer segment is joined. These block copolymers are also referred to "polymodal branched block copolymers" and "star polymers." Examples of radial block copolymers are set forth in the Kitchen et al U.S. Patent No. 3,639,517 which is incorporated herein by reference. These block copolymers are commercially available under the tradename K-Resin® from Phillips Petroleum.

Alternatively, the radial block copolymer of a vinyl aromatic monomer in a conjugated monomer may comprise a radial teleblock copolymer which contains segments or blocks which themselves comprise a conjugated diene polymer, vinyl aromatic polymer blocks, and a coupling agent. These block copolymers are sometimes referred to as "branched" polymers and are set forth in U.S. Patent No. 4,097,550, which is incorporated herein by reference. The radial teleblock copolymers are prepared by methods known in the art, for example, as disclosed in the Zelinski et al U.S. Patent No. 3,281,383, incorporated herein by reference. These polymers are also available commercially, for example, as the Finaprene® products, grades 401, 411, 414, 416 and 417, from Fina Oil Company.

When the compositions of the invention include one or more of the vinyl aromatic polymers as discussed above, it is preferred that the vinyl aromatic polymer is included in an amount of from about 1 to about 30 weight percent.

The compositions of the present invention, and improvements provided thereby, are demonstrated in the following example. Throughout the example and the present specification, parts and percentages are by weight unless otherwise specified.

### EXAMPLE

In this example, Compositions 1 and 2 were prepared according to the present invention and containing a stabilizer composition. Composition 3 was prepared for comparison purposes and did not contain a stabilizer composition. Each of Compositions 1-3 contained 30 parts by weight polyphenylene ether polymer, 60 parts by weight polybutylene terephthalate polymer and 10 parts by weight of a vinyl aromatic-conjugated block copolymer sold commercially under the name Kraton® D-1102 from Shell Chemical. Composition 1 included a stabilizer composition comprising 0.2 parts by weight of a hindered phenolic stabilizer comprising Irganox® 1010, 0.2 parts by weight of a thio stabilizer comprising Seenox® 412S and 0.2 parts by weight of a phosphite stabilizer comprising Ultranox® 626. Composition 2 included a stabilizer composition comprising 0.2 parts by weight of the hindered phenolic stabilizer comprising Irganox® 1010, 0.125 parts by weight of a thio stabilizer comprising Mark® 2140 and 0.125 parts by weight of a phosphite stabilizer comprising Wytox® 312. Samples of each composition were molded at temperatures of 500°F, 525°F and 550°F, after which the notched Izod impact strength of each sample was measured at 73°F according to ASTM-D256. The results of the impact strength measurements are set forth in the Table.

**TABLE**

| Izod Impact Strength, ft-lb/in | | | |
|---|---|---|---|
| Composition | 1 | 2 | 3 |
| 500°F | 16.5 | 16.6 | 12.3 |
| 525°F | 13.6 | 15.6 | 5.6 |
| 550°F | 13.6 | 14.5 | 3.9 |

The results set forth in the Table demonstrate that the thermoplastic compositions containing the stabilizer composition of the present invention exhibited significant improvements in high temperature stability in that the impact strength of the compositions was substantially maintained, even after processing at the highest temperature of 550°F. This demonstrates that the thermoplastic compositions of the invention may be processed over a broader temperature range and therefore are more advantageous for use in injection molding applications. Additionally, it will be apparent one of ordinary skill in the art that other stabilizer compounds in the same general classes as those employed in the example, are suitable for use in the stabilizer compositions employed in the present invention. Actual selection of the exact stabilization composition to be used in a particular composition may be easily affected by one of ordinary skill in the art based on stabilizer volatility, handling procedures, the hydrolytic stability of the stabilizer and the like.

The preceding example is set forth to illustrate specific embodiments of the invention and are not intended to limit the scope of the compositions of the present invention. Additional embodiments and advantages within the scope of the claimed invention will be apparent to one of ordinary skill in the art.

## Claims

1. A thermoplastic composition comprising a polyphenylene ether polymer, a polyalkylene terephthalate polymer and a stabilizer composition comprising a combination of a hindered phenolic stabilizer, a thio stabilizer and a phosphite stabilizer.

2. A thermoplastic composition as defined by claim 1, wherein the stabilizer composition is included in an amount sufficient to improve the high temperature processing stability of the composition.

3. A thermoplastic composition as defined by claim 1, wherein the stabilizer composition is included in an amount of from about 0.01 to about 2 weight percent based on the weight of said polymers.

4. A thermoplastic composition as defined by claim 3, wherein the stabilizer composition is included in an amount of from about 0.2 to about 0.5 weight percent based on the weight of said polymers.

5. A thermoplastic composition as defined by claim 3, comprising from about 5 to about 95 weight percent polyphenylene ether polymer and from about 95 to about 5 weight percent polyalkylene terephthalate polymer, based on the weight of said polymers.

6. A thermoplastic composition as defined by claim 5, comprising from about 15 to about 75 weight percent polyphenylene ether polymer, and from about 85 to about 25 weight percent polyalkylene terephthalate polymer, based on the weight of said polymers.

7. A thermoplastic composition as defined by claim 1, wherein the polyphenylene other polymer comprises poly(2,6-dimethyl-1,4-phenylene) ether.

8. A thermoplastic composition as defined by claim 1, wherein the polyphenylene ether polymer comprises poly(2,3,6-trimethyl-1,4-phenylene) ether.

9. A thermoplastic composition as defined by claim 1, wherein the polyphenylene ether comprises a copolymer of or a blend of polymers formed from 2,6-dimethyl-1,4-phenylene ether and 2,3,6-trimethyl-1,4-phenylene ether.

10. A thermoplastic composition as defined by claim 1, wherein the polyphenylene ether is epoxy-functionalized.

11. A thermoplastic composition as defined by claim 1, wherein the polyphenylene ether is phosphate-functionalized.

12. A thermoplastic composition as defined by claim 1, wherein the polyphenylene ether is ortho-ester-functionalized with an ortho-ester substituted triazine.

13. A thermoplastic composition as defined by claim 1, wherein the polyalkylene terephthalate polymer comprises polybutylene terephthalate.

14. A thermoplastic composition as defined by claim 1, wherein the polyalkylene terephthalate polymer comprises polyethylene terephthalate.

15. A thermoplastic composition as defined by claim 1, wherein the stabilizer composition comprises from about 20 to about 50 weight percent of each of the hindered phenolic, thio, and phosphite stabilizers.

16. A thermoplastic composition as defined by claim 15, wherein the stabilizer composition comprises substantially equal amounts by weight of each of the hindered phenolic, thio and phosphite stabilizers.

17. A thermoplastic composition as defined by claim 1, wherein the hindered phenolic stabilizer comprises an alkyl group of from 1 to about 12 carbon atoms in each of the positions ortho to the phenolic hydroxyl group.

18. A thermoplastic composition as defined by claim 17, wherein at least one of the alkyl groups comprises a tertiary butyl group.

19. A thermoplastic composition as defined by claim 1, wherein the hindered phenolic stabilizer is of a molecular weight which is sufficiently high to prevent volatization of the hindered phenolic stabilizer when the composition is melt compounded.

20. A thermoplastic composition as defined by claim 1, wherein the thio stabilizer comprises a substituted thio propionate compound.

21. A thermoplastic composition as defined by claim 1, wherein the thio stabilizer comprises a thio-substituted aromatic compound.

22. A thermoplastic composition as defined by claim 1, wherein the phosphite stabilizer comprises a triaryl phosphite.

23. A thermoplastic composition as defined by claim 22, wherein each aryl group includes at least one alkyl substituent of from 1 to about 12 carbon atoms.

24. A thermoplastic composition as defined by claim 1, wherein the phosphite stabilizer comprises a trialkyl phosphite.

25. A thermoplastic composition as defined by claim 1, wherein the phosphite stabilizer comprises an alkylaryl phosphite.

26. A thermoplastic composition as defined by claim 1, wherein the phosphite stabilizer comprises a bis(alkyl phenyl) pentaerythritol diphosphite.

27. A thermoplastic composition as defined by claim 26, wherein each phenyl group contains at least two alkyl substituents of from 1 to about 12 carbon atoms.

28. A thermoplastic composition as defined by claim 1, further comprising from about 1 to about 35 weight percent polycarbonate.

29. A thermoplastic composition as defined by claim 1, further comprising an impact modifier.

30. A thermoplastic composition as defined by claim 1, further comprising a vinyl aromatic polymer.

31. A thermoplastic composition as defined by claim 30, wherein the vinyl aromatic polymer comprises a rubber-modified polystyrene polymer.

32. A thermoplastic composition as defined by claim 30, wherein the vinyl aromatic polymer comprises a block copolymer of a vinyl aromatic monomer and an alkene hydrocarbon monomer or a conjugated diene monomer.

33. A thermoplastic composition as defined by claim 32, wherein the vinyl aromatic polymer comprises a radial block copolymer of polymerized vinyl aromatic monomer and polymerized conjugated diene monomer.

34. A thermoplastic composition as defined by claim 26, wherein the block copolymer comprises a styrene-butadiene-styrene block copolymer.

35. A thermoplastic composition as defined by claim 34, wherein the block copolymer is hydrogenated.

36. A thermoplastic composition as defined by claim 30, comprising from about 1 to about 30 weight percent of the vinyl aromatic polymer.
